# EUROPEAN PATENT SPECIFICATION

(11) **EP 2 280 809 B1**
(45) Date of publication and mention of the grant of the patent: **29.07.2015**
(21) Application number: 09738466.3
(22) Date of filing: 30.04.2009
(51) Int. Cl.: B28D 1/00, C04B 41/48

(54) **A PROCESS FOR REINFORCING BLOCKS OR SLABS OF STONE MATERIAL**
VERFAHREN ZUR VERSTÄRKUNG VON BLÖCKEN ODER FLIESEN AUS STEINMATERIAL
PROCÉDÉ DESTINÉ À RENFORCER DES BLOCS OU DALLES DE PIERRE

(30) Priority: 30.04.2008 IT VR20080053
(43) Date of publication of application: 09.02.2011
(73) Proprietor: Aros S.r.l., 37010- Affi (Verona) (IT)
(72) Inventor: FIORATTI, Stefano, I-25015 Desenzano (Brescia) (IT)
(74) Representative: Reniero, Cirillo Silvano
(86) International application number: PCT/IB2009/005437
(87) International publication number: WO 2009/133453

(56) References cited:
- EP-A- 1 170 271
- WO-A-2008/004262
- US-A- 4 177 789

## Description

The present invention regards processes for reinforcing stone material blocks or slabs in quarries according to the preambles of claims 1 and 2. Such processes are known from WO 2008/004262 A1.

Conventionally, stone material blocks are extracted from quarries and are then designed (at least the gangsaw blocks) to be sawed with a machine, e. g. a multiblade sawing frame, disc or multidisc sawing machine, diamond wire cutters or more rarely chain cutters. In the quarry, the blocks are sometimes subjected to a first working via squaring or rough-hewing by means of a diamond wire cutter or chain cutter, and in any case, rough-hewn or not, they must be handled for their loading on vehicles for transport and storage. Finally, the blocks are subjected to sawing in order to obtain slabs at a cutting center, possibly subjected to resining, at least for the defective blocks.

For the separation of a block from a bench, one can proceed, as is known, in various modes. Several of the most widely used separation methods are those which provide for the cutting with diamond wire cutter, with water jet, with flame-jet or with the use of explosives.

The first phase of the cutting operations of the bench by means of diamond wire involves making two holes or grooves in the bench, e. g. a vertical groove starting from the upper face of the bench, and a horizontal groove starting from the front or side face of the bench. The holes or grooves are made in a manner so as to intersect at an inner portion of the bench, roughly at a corner (inside the bench) of the block to be extracted.

In the grooves or holes thus made, a diamond wire is inserted, preferably driving it by means of pulleys, and then one cuts a surface of the block situated in the plane identified by the two holes or grooves.

Alternatively, along the plane identified by the two holes or grooves, an aligned series of coplanar holes can be made, each hole close to the next, so to affect the entire lateral face of the block being obtained. Then, by repeating the above operations along planes perpendicular to the surface already cut (one on the rear, one on the bottom and possibly one on the side of the block), the separation is carried out of the block from its bench. In the case of aligned holes, the separation is carried out by means of explosive. Once separation is completed, the block must be extracted from the bench.

The extraction very often terminates with the forward overturning or side overturning of the block. The overturning is carried out, for example, by means of a hydraulic splitting jack, a (pneumatic) splitting cushion, or a mechanical digger. Before causing the overturning or fall of the block on the underlying space, a bed or cushion is arranged at the fall front, which is intended to damp the impact of the block and is usually composed of debris or another relatively minute discard material.

Notwithstanding the precautions normally taken for preserving the integrity of the block, both during such overturning step and during the movement of the block for loading on a vehicle, during the transport and laying in warehouse or loading on the sawing frame or on disc block cutters, the block can sustain damage of various nature and size, such as fractures, cracks, etc. - usually, during the steps of extraction of a block from a bench, 30 - 60% of the material is lost. It is therefore imperative to carry out block reinforcement operations, at least for certain types of stone material, before proceeding with its sawing.

The main object of the present invention is that of providing a process for obtaining blocks in the quarry which is suitable for eliminating or substantially reducing the risk of damaging a block from the time of its separation from the respective bench.

Another object of the present invention is that of providing a process for obtaining blocks in the quarry which is easy and practical to carry out and relatively economical to apply.

These and still other objects, which will be clearer below, are achieved by a process for reinforcing blocks or slabs of stone material in the quarry according to claim 1 and 2 process according to claim 2.

The resin-based composition preferably comprises epoxy resins, polyurethane resins, polyester resins, acrylic polyester resins, ecological resins of vegetable derivation or a mixture thereof, e. g. that produced by Dagos s.r.l. of Milan and sold under the commercial name of Dagopol 016.

The resin-based composition can preferably comprise an "expanding" foam or resin, e. g. comprising polyurethane resins, for example those produced by Dagos s.r.l. and sold under the commercial names of Dagoxil KR0120Co or Dagosis MH6040ML, or epoxy resins, e. g. that produced by Aditya Biria Chemicals of Bangkok (Thailand) and sold under the commercial name of Epotec YD1106D25.

Further aspects and advantages of the present invention will be clearer from the following detailed description of specific embodiments thereof, the description being made with reference to the attached drawings, in which:
Figure 1 is a slightly top, perspective view of a block separated from a bench and treated in a quarry, according to the process of the present invention;
Figure 2 is a top view of a detail of a block separated from the bench and subjected to resining in a quarry according to the process of the present invention;
Figure 3 is a slightly top, perspective view of a hollow tube for the passage of a diamond wire for achieving a step of the process according to the present invention in a quarry;
Figure 4 is a slightly top, perspective view of a detail of a block subjected to a treatment step in a quarry for carrying out another embodiment of the process according to the present invention;
Figure 4a is a slightly top, perspective view of a block separated from a bench and subjected to a treatment step in a quarry according to another embodiment of the present invention;
Figures 5 and 6 are partial section views of a block separated from a bench and in treatment step in a quarry according to another embodiment of the process of the present invention;
Figure 7 is a slightly top, perspective view of a block separated from a bench and subjected to a treatment phase in a quarry according to another embodiment of the present invention;
Figure 8 is a plan view of a flexible textile structure with reinforcing framework for a preferred achievement of the treatment process in a quarry like that illustrated in Fig. 7;
Figure 9 is a perspective view of a reinforced and pre-impregnated fabric element for carrying out the process according to the invention;
Figures 10 and 11 are partial views in vertical cross-section of a block separated from a bench and treated in a quarry according to the present invention by using the reinforced fabric element of Figs. 8 and 9; and
Figures 12 - 14 illustrate respective treatment steps in a quarry of the process according to the present invention.

In the drawing set, equivalent or similar parts or components were marked with the same reference number.

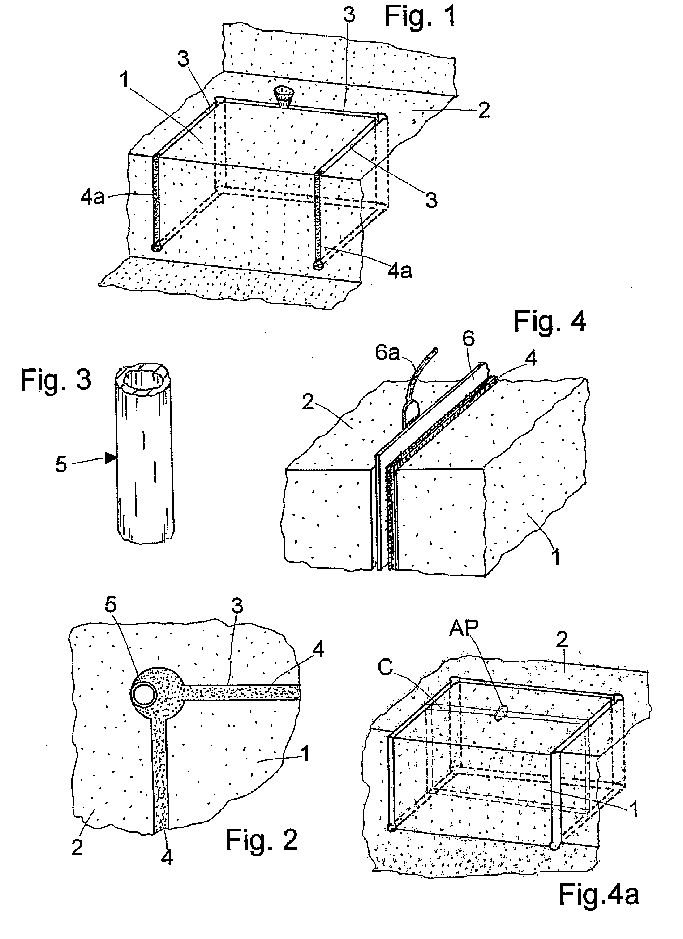

First, with reference to Fig. 1, a block 1 is illustrated that was separated from the bench 2 at four of its faces, e. g. by means of the use of a suitable diamond wire cutter. Between the block 1 and the bench, three sections thus remain delimited (two lateral and one rear) of a continuous gap 3, at which a resin-based polymerizable coating and cover layer 4 is applied, e. g. sprayed or cast. A coating and cover layer is also applied (sprayed) on the front face of the block and, if desired, also on its upper face, so that the block is protected at four or five of its faces.

Preferably, the two lateral gap sections 3, along their opening at the front face of the block, are initially closed, preferably by means of a sealant material 4a (e. g. a silicon material), so that when one pours or applies the resin-based layer into the gap 3 the fluid or semi-fluid resinous material cannot exit forward, at the front the bench.

Since, with a resining process as described above, the resin layer adheres to both the block and to the bench after the hardening (polymerization) of the resin-based layer 4, it is necessary (after the resin hardening) to separate the block now anchored to the bench. Such separation can be completed by once again carrying out one or more cutting steps by means of a cutter or hot wire, so to once again separate the (now resined) block from the bench with the possibility of cutting the cover layer in half. Thus, at the lateral and rear faces of the block, the bench results already coated in the subsequent block digging.

Preferably, before casting the polymerizable resinous composition 4 in the gap 3, one or more ducts or tubes 5 are prearranged (see Figs. 2 and 3) in the gap 3, preferably at and parallel to the horizontal corners (two lower lateral corners and one rear corner) and vertical (rear) corners of the block, and then the casting is carried out of the resinous composition. Once the hardening of the resin-based composition is completed, the ducts or tubes 5 are extracted, so tunnels remain delimited in the resin-based composition, through which it is possible to pass a hot wire and thus once again proceed with the cutting of the wire layer, preferably in half, and thus to achieve the final separation of the (now resined) block from the bench.

According to the embodiment illustrated in Fig. 4, a plate 6 is prearranged in the gap 3, e. g. a metal plate, preferably spread with a suitable release agent product. After casting the resin-based composition 4 inside the two halves of the gap 3 separated by the plate 6, the metal plate 6 placed in electrical connection by means of a conductor 6a with a current generator (not shown in the drawings and of any suitable type) can be heated in order to accelerate the hardening or solidification process of the resin-based composition 4. The presence of the release agent product on the plate 6 prevents the resin-based composition from adhering to the plate, which can be easily removed, in such a manner as to avoid the need to perform a sawing operation of the resin. If desired, should the plate 6 be maintained close to the bench, the resin is prevented from adhering to the latter, such resin being applied only to the block 1.

The plate could also be substituted by a silicon covering cloth (a catalyzed silicon resin), with one or more conductor filaments or heating elements embedded therein. Such covering cloth can be obtained by arranging the conductors at the impression of a mold and then casting the resin in such impressions.

With reference to Fig. 4a, a block 1 is illustrated that has been separated at least at four of its faces from a bench 2, around which, before the resining step, a belt element or belt C is prearranged, equipped with one or more grip rings or handles AP. Subsequently, a resining step is carried out, covering the belt with a resin layer but maintaining the grip rings partly or entirely uncovered and thus engageable. Due to the presence of such rings, it will be possible to transport the blocks in an easy and safe manner, since, during the extraction operations, chains can be inserted inside the rings, by means of which it will be possible to easily drag the block. When the block is prearranged on top of the load flatbed of a transport means, its fixing/locking in position can be ensured by passing tie rods inside the rings AP.

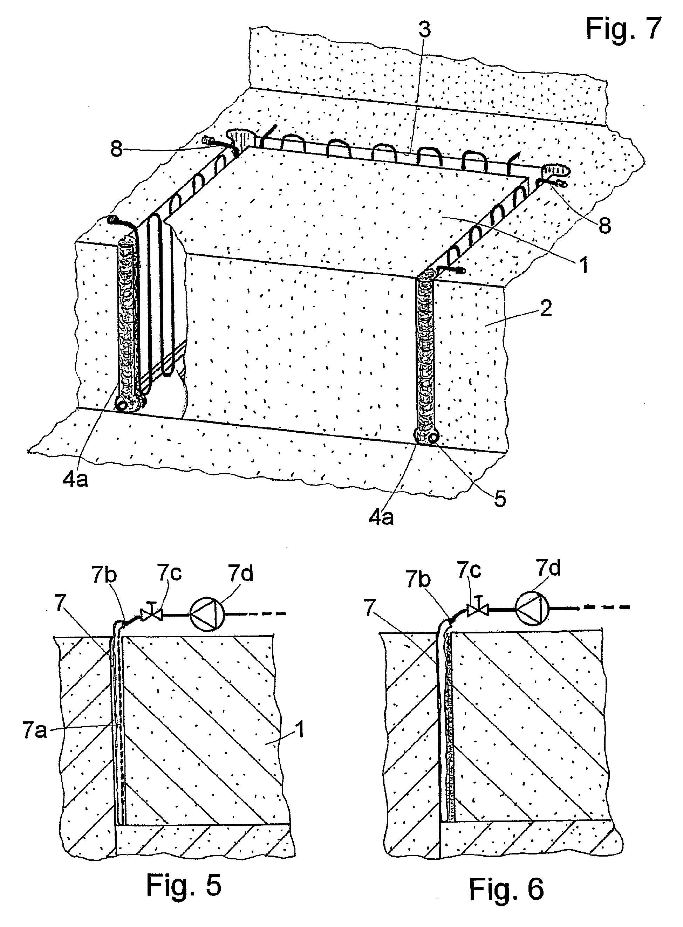

In Figs. 5 and 6, a step for achieving the process according to the present invention is illustrated in which a bag or chamber 7 is inserted in the gap 3, such chamber 7 having a work surface 7a in which a plurality of holes are made which, in use, are arranged facing a respective face of the block 1. The chamber 7 has an upper mouth 7b for the forced insertion of a resin-based fluid composition 4. The mouth 7b, by means of the control valve 7c, is in fluid communication with the delivery of a pumping group 7d with its own suction mouth in fluid communication with a suitable resinous composition source (not shown in the drawings) and designed to supply a resinous composition 4 under pressure, so that the latter will be sprayed on the face of the block 1 situated in front of the holes of the bag 7.

Figure 7 is similar to Figure 1, but in the gap 3 between the block 1 and the bench a plurality of heat conductor elements 8 are inserted, e. g. heating tube elements, preferably configured as coils, so to have a wide heat exchange surface inside the gap 3. After having cast or otherwise inserted a thermosetting resinous composition into the gap 3, current is supplied to the coil elements 8, in such a manner as to cause a quick hardening of the resinous composition.

With the process illustrated in Figure 7, it is possible to prearrange ducts 5 (described with reference to Figs. 2 and 3) in the gap 3 before inserting the thermosetting resinous composition.

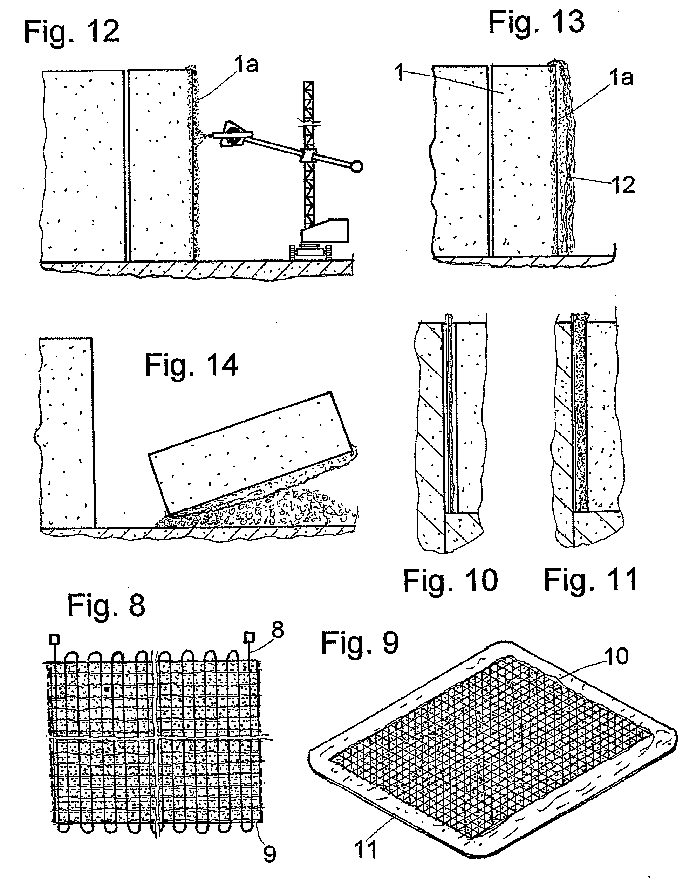

In Figure 8, a net 9 is illustrated, e. g. made of plastic material reinforced with fiberglass; a heating coil 8 extends coextensively with such net 9. In addition to constituting a metallic reinforcement structure for the surfaces of the block 1 to be resined, the net 9 also allows ensuring a quick and uniform polymerization of the thermosetting resinous compound.

According to another variant of the process according to the present invention (see in particular Figs. 9 - 11), a fabric layer 10 (which can also be made of non-woven material) is prearranged in the gap 3 on a sheet of material impermeable to the resin-based composition, e. g. a sheet of polyethylene or polyethylene terephthalate 11 in contact with the bench, and it is pre-impregnated with a resinous composition. Due to the presence of the polyethylene sheet 11, the resinous composition, once hardened, will remain adhered to the block 1, but not to the bench, which prevents having to conduct other operations before block extraction.

Figures 12 to 14 illustrate the application operation, for example via spraying, of one or more layers of a resinous composition 12 on the front surface 1 a of the block 1, which constitute a kind of anti-impact cushion, at the time of the usual forward overturning of the block once extracted over a bed of filling material. Such application can be carried out either before or after the cutting operations. Due to such front resinous coating, the impact of the block 1 against the ground is considerably damped, and the risks of it being damaged are much lower.

If desired, after the forward overturning of the block 1, the resining is carried out in the quarry of another three adjacent faces of the block or of all the block faces, so as to create a layer or layers thereon which protect against impact damage both during the transfer after extraction to a transport means and during the subsequent handling before being sawed. The sawing itself can be conducted in a safe manner, without risking flaking or crumbling in the block.

If desired, the cutting can be carried out in the quarry, e. g. with diamond wire cutter, of three surfaces/faces of the block, though not the fourth, for example the lower surface or the rear surface of the block. The resinous composition is then applied to the cut faces of the block, and then one cuts the block surface that is still attached to the bench. The front face of the block is resined, the block is overturned and then resinous composition is also applied to the last-cut surface.

With the process according to the present invention, it is therefore possible to obtain, in a simple and economical manner, a block 1 that is reinforced in the quarry, so that it is protected for every other operation following extraction.

The above-described process is susceptible to numerous modifications and variants within the scope of protection as defined by the claims.

## Claims

1. A process for reinforcing blocks or slabs of stone material in a quarry, including the steps of cutting and/or perforation of a bench at at least three faces of a block to be obtained and its separation from the bench, **characterized in that** before and optionally after the separation of the block from its bench, it comprises the operation of applying at least one layer of a polymerizable resinous composition, suitable for acting as a reinforcing and impact damping cover for at least one face of the block.

2. A process for reinforcing blocks or slabs of stone material in a quarry, **characterized in that** before block extraction from the bench it comprises the following steps:
- carrying out at least one step of cutting in a bench (2) along at least one work plane, thereby obtaining at least one gap (3); and
- applying at least one polymerizable resinous composition at said at least one gap (3).

3. A process according to claim 2, **characterized in that** it comprises, after said step of applying at least one polymerizable resinous composition, the steps of:
- carrying out at least one second step of cutting along at least a second work plane that intercepts and is substantially orthogonal to said at least one first work plane, so to delimit a block or slab;
- separating the block or slab from said bench; and
- applying at least one polymerizable resinous composition in said at least one second gap.

4. A process according to claim 3, **characterized in that** it comprises, after said at least one second cutting step:
- the resining of the front face of the block; and
- its forward overturning.

5. A process according to any claim 1 to 4, **characterized in that** it comprises at least one step of polymerization or hardening of said at least one resinous composition.

6. A process according to claim 2, **characterized in that** said step for inserting at least one resin-based compound comprises the insertion in said at least one gap of at least one fabric that is pre-impregnated with said polymerizable resinous composition.

7. A process according to claim 5 or 6, **characterized in that** said resinous composition is thermosetting and that its polymerization involves a heat supply.

8. A process according to claim 7, **characterized in that** the heat supply is carried out by means of at least one electric resistor element.

9. A process according to claim 8, **characterized in that** said at least one etectric resistor element is arranged in a textile material matrix (9).

10. A process according to any claim 1 to 5, **characterized in that** said step for inserting at least one resin-based compound occurs by inserting a silicon-based covering cloth with one or more conductor filaments or resistors embedded therein. therein.

11. A process according to claim 2 **characterized in that** said step of inserting at least one resinous composition is conducted by arranging, in said at least one gap (3), at least one fabric layer (10) pre-impregnated with said polymerizable resinous composition and covered with a film or sheet of material that is impermeable to said resinous composition, which is arranged facing and close to said bench.

12. A process according to claim 11, **characterized in that** said sheet of impermeable material comprises a sheet of polyethylene or polyethylene terephthalate.

13. A process according to claim 2 **characterized in that** said step of inserting said polymerizable resinous composition comprises:
- applying, in said at least one gap (3), at least one foaming agent product; and
- causing and allowing the expansion of said foaming agent material in said at least one gap (3).

14. A process according to any claim 1 to 5, **characterized in that** it comprises, between said cutting step and said polymerizable resinous composition insertion step, the steps of:
- arranging at least one distribution bag equipped with supply mouth and at least one distribution hole directed towards the block to be treated; and
- supplying said at least one resinous composition under pressure to the supply mouth of said bag, thereby being pushed out through said at least one hole in order to be deposited on said block (1).

15. A process according to claim 2, **characterized in that** at the front surface (in use) of said bench, said gap is frontally closed by means of a sealant component, whereby when the resinous composition is applied in said at least one gap (3), said at least one resinous composition cannot exit out from the front of the bench.

16. A process according to any preceding claim, **characterized in that** it comprises:
- carrying out at least one step of cutting at least one bench (2) along at least one work plane, thereby obtaining at least one gap (3);
- arranging at least one duct (5) in said at least one gap (3);
- applying at least one polymerizable resinous composition in said at least one gap (3);
- allowing or causing the hardening of said resinous composition;
- extracting said at least one duct (5), whereby a respective cavity remains delimited in said hardened resin-based composition;
- inserting a cutting means in said hole cavity; and
- actuating the cutting means whereby carrying out the cutting of said hardened resin-based composition.

17. A process according to any preceding claim, **characterized in that** it comprises the resining of the front surface (in use) of the block (1).

18. A process according to any claim 1 to 17, **characterized in that** said resin-based composition comprises at least one resin selected from the group including epoxy resins, polyurethane resins, polyester resins, acrylic polyester resins, ecological resins of vegetable origin or a mixture thereof.

19. A process according to any preceding claim, **characterized in that** it comprises the following steps in sequence:
- cutting and/or perforating a bench at at least three faces of a block to be obtained;
- arranging, at at least four faces of the block, a belt or belt element (C) equipped with at least one grip ring or handle (AP);
- applying at least one polymerizable resinous composition at at least one of said four faces of the block, thereby covering said belt with a layer of resin while maintaining said at least one grip ring (AP) uncovered and thus engageable.

## Patentansprüche

1. Verfahren zur Verstärkung von Blöcken oder Brammen aus Steinmaterial in einem Steinbruch, umfassend die Schritte des Schneidens und/oder Perforation einer Charge auf wenigstens drei Flächen eines zu erhaltenden Blocks und seine Trennung von der Charge, **dadurch gekennzeichnet, dass** vor und wahlweise nach der Trennung des Blocks aus seiner Charge, umfasst dieses das Aufbringen zumindest einer einzigen Schicht aus einer polymerisierbaren Harzzusammensetzung, geeignet zur Verwendung als eine Abdeckung für die Bewehrung und Dämpfung von Stößen für mindestens eine Oberfläche des Blocks.

2. Verfahren zur Verstärkung von Blöcken oder Brammen aus Steinmaterial in einem Steinbruch, **dadurch gekennzeichnet dass** er, bevor ein Block aus der Charge extrahiert wird, folgende Vorgänge umfasst:
- Durchführung von mindestens einem Schneidvorgang in einer Charge (2) zumindest entlang einer Arbeitsebene, um so zumindest einen leeren Raum (3) zu erhalten; und
- Aufbringen von mindestens einer polymerisierbaren Harzzusammensetzung auf dem besagten zumindest leeren Raum (3).

3. Verfahren nach Anspruch 2, **dadurch gekennzeichnet, dass** dieses nach dem besagten Vorgang des Aufbringens von mindestens einer polymerisierbaren Harzzusammensetzung, folgende Vorgänge umfasst:
- Durchführung von mindestens einem zweiten Schneidvorgang entlang mindestens einer zweiten Arbeitsebene, die schneidet und im Wesentlichen senkrecht zu der ersten Arbeitsebene ist, um einen Block oder Bramme zu begrenzen;
- Trennung des Blocks oder der Bramme von der besagten Charge; und
- Aufbringen von mindestens einer polymerisierbaren Harzzusammensetzung in dem besagten zumindest zweiten leeren Raum.

4. Verfahren nach Anspruch 3, **dadurch gekennzeichnet, dass** dieses, nach dem besagten mindestens zweiten Schneidvorgang, Folgendes umfasst:
- die Anbringung des Harzes auf der Vorderfläche des Blocks; und
- seine Vorwärtsdrehung.

5. Verfahren nach einem der Ansprüche 1 bis 4, **dadurch gekennzeichnet, dass** es mindestens einen Vorgang der Polymerisation oder des Härtens von mindestens der besagten Harzzusammensetzung umfasst.

6. Verfahren nach Anspruch 2, **dadurch gekennzeichnet, dass** der besagte Vorgang der Einführung von mindestens einer Harz-basierten Verbindung das Einführen in den zumindest leeren Raum von mindestens einem Stoff umfasst, der zuvor mit der Harzzusammensetzung imprägniert wurde.

7. Verfahren nach Anspruch 5 oder 6, **dadurch gekennzeichnet, dass** sich die besagte Harzzusammensetzung thermisch stabilisiert, und dass ihre Polymerisation eine Wärmezufuhr umfasst.

8. Verfahren nach Anspruch 7, **dadurch gekennzeichnet, dass** die Wärmezufuhr mit Hilfe von zumindest einem elektrischen Widerstandselement erfolgt.

9. Verfahren nach Anspruch 8, **dadurch gekennzeichnet, dass** zumindest das besagte elektrische Widerstandselement in einer Matrix (9) aus einem textilen Material angeordnet ist.

10. Verfahren nach einem der Ansprüche 1 bis 5, **dadurch gekennzeichnet, dass** der besagte Vorgang der Einführung von mindestens einer Harz-basierten Verbindung durch das Einführen eines Gewebeabdeckung aus Silikon mit einem oder mehreren leitfähigen Fäden oder durch darin eingebetteten Widerstände, erfolgt.

11. Verfahren nach Anspruch 2, **dadurch gekennzeichnet, dass** der besagte Vorgang des Einführens von mindestens einer Harzzusammensetzung derart durchgeführt wird, dass im besagten mindestens einen leeren Raum (3) mindestens eine Schicht aus Stoff (10) angeordnet wird, die zuvor mit dem polymerisierbaren Harzzusammensetzung imprägniert und mit einem Film oder einer Folie aus undurchlässigem Material bezüglich der besagten Harzzusammensetzung abgedeckt wurde, wobei sie zugewandt und in der Nähe der besagten Charge angeordnet ist.

12. Verfahren nach Anspruch 11, **dadurch gekennzeichnet, dass** die besagte Folie aus undurchlässigem Material eine Folie aus Polyethylen oder Polyethylenterephthalat aufweist.

13. Verfahren nach Anspruch 2, **dadurch gekennzeichnet, dass** der Vorgang der Einführung des polymerisierbaren Harzzusammensetzung Folgendes umfasst:
- Auftragung im besagten wenigstens einem leeren Raum (3) von zumindest einem Schaummittel; und
- Veranlassung oder Gestattung der Ausdehnung des besagten Schaummittels im besagten zumindest einem leeren Raum (3).

14. Verfahren nach einem der Ansprüche 1 bis 5, **dadurch gekennzeichnet, dass** es zwischen dem besagten Schneidvorgang und dem besagten Vorgang der Einführung einer Harzzusammensetzung, folgende Vorgänge umfasst:
- Anordnung von wenigstens eines Beutels mit einem Versorgungsmundstück und mindestens einem Verteilungsloch, die dem zu behandelnden Block zugewandt sind; und
- Zuführung von mindestens der besagten Harzzusammensetzung unter Druck zum Versorgungsstück des besagten Beutels, so dass dieser durch den besagten mindestens einzelnen Loch ausgedrückt wird, um so auf dem besagten Block (1) angeordnet zu werden.

15. Verfahren nach Anspruch 2, **dadurch gekennzeichnet, dass** auf der Vorderseite (im Gebrauch) der besagten Charge der besagte leere Raum an der Vorderseite durch ein Dichtbauteil geschlossen wird, so dass zumindest wenn die Harzzusammensetzung auf dem besagten leeren Raum (3) aufgebracht wird, zumindest die besagte Harzzusammensetzung nicht aus dem vorderen Teil der Charge kommen kann.

16. Verfahren nach einem der vorhergehenden Ansprüche, **dadurch gekennzeichnet, dass** sie Folgendes umfasst:
- Durchführung von mindestens einem Schneidvorgang von mindestens einer Charge (2) zumindest entlang einer Arbeitsebene, in einer Weise um mindestens einen leeren Raum (3) zu erhalten;
- Bereitstellung von mindestens eine Leitung (5) im besagten leeren Raum (3);
- Aufbringen von mindestens einer polymerisierbaren Harzzusammensetzung im besagten mindestens leeren Raum (3);
- Durchführung der Härtung der besagten Harzzusammensetzung;
- Extraktion der wenigstens einer Leitung (5), wobei ein entsprechender Hohlraum in der besagten Harz-basierten Zusammensetzung begrenzt verbleibt;
- Einführung von einer Schneideinrichtung in dem besagten Hohlraum der Bohrung; und
- Betätigung der Schneideinrichtung, um das Schneiden der besagten Harz-basierten Zusammensetzung durchzuführen.

17. Verfahren nach einem der vorhergehenden Ansprüche, **dadurch gekennzeichnet, dass** es die Aufbringung des Harzes auf der Frontfläche (im Gebrauch) des Blocks (1) umfasst.

18. Verfahren nach einem der Ansprüche 1 bis 17, **dadurch gekennzeichnet, dass** die besagte Harz-basierte Zusammensetzung mindestens ein Harz aufweist, das aus der Gruppe bestehend aus Epoxyharzen, Polyurethanharzen, Polyesterharzen, Acrylpolyesterharzen, Harzen aus ökologischen pflanzlichen Ursprung oder eine Mischung von diesen, ausgewählt wird.

19. Verfahren nach einem der vorhergehenden Ansprüche, **dadurch gekennzeichnet, dass** es nacheinander folgende Schritte umfasst:
- Schneiden und/oder Perforieren einer Charge bei zumindest drei Flächen eines zu erhaltenden Blocks;
- Bereitstellung, bei zumindest vier Oberflächen des Blocks, von einem Riemen oder Riemen-Element (C) mit mindestens einem Greifring oder einem Haltegriff (AP);
- Aufbringen von mindestens einer polymerisierbaren Harzzusammensetzung an zumindest einer der vier Flächen des Blocks, derart dass der besagte Riemen mit einer Schicht aus Harz bedeckt wird, wobei wenigstens ein Greifring (AP) freigelegt verbleibt und so gekoppelt werden kann.

## Revendications

1. Procédé pour renforcer des blocs ou dalles de matériau de pierre dans une carrière, comprenant les étapes de coupe et/ou de perforation d'une charge constituée d'au moins trois faces d'un bloc à obtenir avec sa séparation de la charge, **caractérisé en ce qu'**avant et alternativement après la séparation du bloc de sa propre charge, il comprend l'opération consistant à appliquer au moins une couche d'une composition résineuse polymérisable, apte à agir comme une couverture de renforcement et d'amortissement des chocs pour au moins une face du bloc.

2. Procédé pour renforcer des blocs ou dalles de matériau en pierre dans une carrière, **caractérisé en ce qu'**avant de retirer un bloc de la charge, il comprend les opérations suivantes:
- exécuter au moins une opération de coupe dans une charge (2) le long d'au moins un plan de travail, de manière à obtenir au moins un espace vide (3); et
- appliquer au moins une composition résineuse polymérisable sur ledit au moins un espace vide (3).

3. Procédé selon la revendication 2, **caractérisé en ce qu'**il comprend, après ladite opération consistant à appliquer au moins une composition de résine polymérisable, les opérations consistant à:
- exécuter au moins une deuxième opération de coupe le long d'au moins un deuxième plan de travail qui coupe et est sensiblement perpendiculaire audit premier plan de travail, de manière à délimiter un bloc ou dalle;
- séparer le bloc ou la dalle de ladite charge; et
- appliquer au moins une composition résineuse polymérisable dans ledit au moins deuxième espace vide.

4. Procédé selon la revendication 3, **caractérisé en ce qu'**il comprend, après ladite au moins deuxième opération de coupe:
- application d'une résine sur la face avant du bloc; et
- sa rotation vers l'avant.

5. Procédé selon l'une quelconque des revendications 1 à 4, **caractérisé en ce qu'**il comprend au moins une opération de polymérisation ou durcissement d'au moins ladite composition résineuse.

6. Procédé selon la revendication 2, **caractérisé en ce que** ladite opération d'insertion d'au moins un composé à base de résine comprend l'insertion dans ledit au moins espace vide d'au moins un tissu, qui est préalablement imprégné avec ladite composition résineuse polymérisable.

7. Procédé selon la revendication 5 ou 6, **caractérisé en ce que** ladite composition résineuse est stabilisée thermiquement et que sa polymérisation implique un apport de chaleur.

8. Procédé selon la revendication 7, **caractérisé en ce que** l'apport de chaleur est effectué par au moins un élément résistant électrique.

9. Procédé selon la revendication 8, **caractérisé en ce qu'**au moins un élément résistant électrique est disposé dans une matrice (9) en un matériau textile.

10. Procédé selon l'une quelconque des revendications 1 à 5, **caractérisé en ce que** ladite opération d'insertion d'au moins une composition résineuse est réalisée en insérant une enveloppe en tissu à base de silicone avec un ou plusieurs filaments conducteurs ou résistances, intégrées à l'intérieur.

11. Procédé selon la revendication 2, **caractérisé en ce que** ladite opération d'insertion d'au moins une composition résineuse est effectuée en disposant, dans ledit au moins un espace vide (3), d'au moins une couche de tissu (10) préalablement imprégné avec ladite composition résineuse polymérisable et recouvert d'un film ou une feuille de matériau qui est imperméable par rapport à ladite composition résineuse, qui est placé en regard et à proximité de ladite charge.

12. Procédé selon la revendication 11, **caractérisé en ce que** ladite feuille de matériau imperméable comprend une feuille en polyéthylène ou en polyéthylène téréphtalate.

13. Procédé selon la revendication 2, **caractérisé en ce que** ladite opération d'insertion de ladite composition résineuse polymérisable comprend les opérations de:
- appliquer, dans ledit au moins un espace vide (3), d'au moins un produit avec un agent moussant; et
- provoquer et permettre l'expansion de ladite matière d'un agent moussant dans ledit au moins un espace vide (3).

14. Procédé selon l'une quelconque des revendications 1 à 5, **caractérisé en ce qu'**il comprend, entre ladite opération de coupe et ladite opération d'insertion d'une composition résineuse, les opérations consistant à:
- mettre en place au moins un sac de distribution muni d'une embouchure d'alimentation et au moins d'un trou de répartition, tourné vers le bloc à traiter; et
- alimenter au moins ladite composition résineuse sous pression à l'embouchure d'alimentation dudit sac, de sorte qu'il soit expulsé à travers ledit au moins un trou, de manière à être déposé sur ledit bloc (1).

15. Procédé selon la revendication 2, **caractérisé en ce que** sur la face frontale (lors de l'utilisation) de ladite charge, ledit espace vide est fermé à l'avant par l'intermédiaire d'un organe d'étanchéité, de sorte que lorsque la composition résineuse est appliquée dans ledit au moins uni espace vide (3), au moins ladite composition résineuse ne peut pas sortir de la partie avant de la charge.

16. Procédé selon l'une quelconque des revendications précédentes, **caractérisé en ce qu'**il comprend:
- exécuter au moins une opération de coupe d'au moins une charge (2) le long d'au moins un plan de travail, de telle manière à obtenir au moins un espace vide (3);
- disposer au moins un conduit (5) dans au moins ledit espace vide (3);
- appliquer au moins une composition résineuse polymérisable dans ledit au moins un espace vide (3);
- permettre ou provoquer le durcissement de ladite composition résineuse ;
- extraire ledit au moins un conduit (5), dans lequel une cavité respective reste délimitée dans ladite composition durcie à base de résine;
- insérer un moyen de coupe dans ladite cavité du trou; et
- actionner le moyen de coupe de façon à effectuer la coupe de ladite composition durcie à base de résine.

17. Procédé selon l'une quelconque des revendications précédentes, **caractérisé en ce qu'**il comprend l'application de la résine sur la face avant (lors de l'utilisation) du bloc (1).

18. Procédé selon l'une quelconque des revendications 1 à 17, **caractérisé en ce que** ladite composition à base de résine comprend au moins une résine choisie dans le groupe constitué par les résines époxy, les résines de polyuréthanne, les résines de polyester, les résines de polyester acryliques, les résines écologiques d'origine végétale ou un mélange de celles-ci.

19. Procédé selon l'une quelconque des revendications précédentes, **caractérisé en ce qu'**il comprend en séquence les étapes suivantes:
- couper et/ou perforer une charge en correspondance d'au moins trois faces d'un bloc à obtenir;
- mettre à disposition, en correspondance d'au moins quatre faces du bloc, une ceinture ou un élément de ceinture (C) muni d'au moins un anneau ou une poignée de préhension (AP);
- appliquer au moins une composition résineuse polymérisable au niveau d'au moins l'une desdites quatre faces du bloc, de manière à recouvrir ladite ceinture d'une couche de résine, en maintenant au moins ledit anneau de préhension (AP) non couvert et par conséquent en prise.
